(19) Europäisches Patentamt
European Patent Office
Office européen des brevets

(11) EP 2 296 210 A1

(12) **EUROPEAN PATENT APPLICATION**
published in accordance with Art. 153(4) EPC

(43) Date of publication:
16.03.2011 Bulletin 2011/11

(51) Int Cl.:
*H01M 4/88* (2006.01)    *H01M 4/86* (2006.01)
*H01M 8/10* (2006.01)

(21) Application number: 09758318.1

(22) Date of filing: 02.06.2009

(86) International application number:
PCT/JP2009/060059

(87) International publication number:
WO 2009/148051 (10.12.2009 Gazette 2009/50)

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

(30) Priority: 05.06.2008 JP 2008148526

(71) Applicant: Tokuyama Corporation
Shunan-shi
Yamaguchi 745-8648 (JP)

(72) Inventors:
• FUKUTA, Kenji
Shunan-shi
Yamaguchi 745-8648 (JP)
• WATANABE, Shin
Shunan-shi
Yamaguchi 745-8648 (JP)
• YAMASHITA, Yoshinobu
Shunan-shi
Yamaguchi 745-8648 (JP)
• YANAGI, Hiroyuki
Shunan-shi
Yamaguchi
7458648 (JP)

(74) Representative: Duckworth, Timothy John et al
J.A. Kemp & Co.
14 South Square
Gray's Inn
London WC1R 5JJ (GB)

(54) **METHOD FOR PRODUCING ION CONDUCTIVITY-IMPARTING AGENT FOR CATALYST ELECTRODE LAYER OF ANION-EXCHANGE MEMBRANE FUEL CELL**

(57) Disclosed is a method for producing an ion-conductivity providing agent for a catalyst electrode layer of an anion-exchange membrane type fuel cell comprising: producing anionic conductive resin including a quaternary onium base having a halogeno ion as its counterion, and bringing the halogen type anionic conductive resin into contact with carbonate solution and/or bicarbonate solution to directly obtain anionic conductive resin in which at least a part of the counterion of said quaternary onium base is $CO_3^{2-}$ and/or $HCO_3^-$, without ion exchange of the counterion to OH-type by using deleterious substance such as sodium hydroxide. The purpose is to provide a method for stably producing an ion-conductivity providing agent used for giving ion conductivity to a catalyst electrode layer of an anion-exchange membrane type fuel cell, the method being easy to operate, the ion-conductivity providing agent showing constant effect for giving ion conductivity.

FIG. 1

**Description**

TECHNICAL FIELD

The present invention relates to a method for producing an ion-conductivity providing agent used for a catalyst electrode layer joined to an anion-exchange membrane which is used in an anion-conducting type solid polyelectrolyte type fuel cell.

BACKGROUND ART

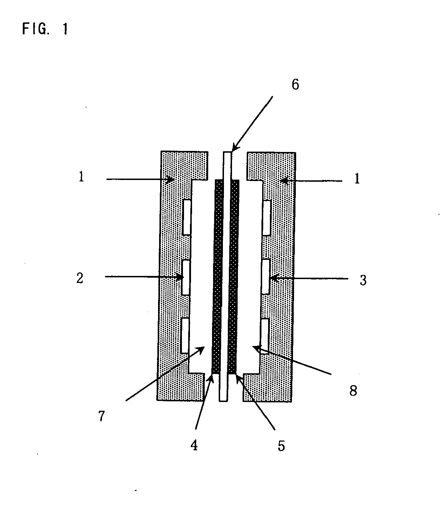

A solid polymer type fuel cell uses solid polymer such as ion-exchange resin as its electrolyte and is characterized by having relatively low operating temperature. The solid polymer type fuel cell has, as shown in FIG. 1, a basic structure wherein a space surrounded by cell bulkhead 1 having a fuel flow hole 2 and oxidizing gas flow hole 3, respectively communicated with outside, is divided by a membrane assembly in which a fuel chamber side catalyst electrode layer 4 and an oxidizing agent chamber side catalyst electrode layer 5 are respectively bonded to both surfaces of a solid polyelectrolyte membrane 6 to form a fuel chamber 7 communicated with outside via the fuel flow hole 2 and an oxidizing agent chamber 8 communicated with outside via the oxidizing gas flow hole 3. Then, in the solid polymer type fuel cell having the above basic structure, fuel including hydrogen gas or liquid fuel such as methanol, etc. is supplied into said fuel chamber 7 via the fuel flow hole 2, and oxygen or oxygen containing gas such as air to act as an oxidizing agent is supplied into the oxidizing agent chamber 8 via the oxidizing gas flow hole 3. Furthermore, an external load circuit is connected between both catalyst electrode layers to generate electric energy by the following mechanism.

When using a cation-exchange type electrolyte membrane as the solid polyelectrolyte membrane 6, a proton (hydrogen ion) generated by contacting a fuel with a catalyst included in the fuel chamber side catalyst electrode layer 4 conducts in the solid polyelectrolyte membrane 6 and moves into the oxidizing agent chamber 8 to generate water by reacting with oxygen in the oxidizing agent gas in the oxidizing agent chamber side catalyst electrode layer 5. On the other hand, an electron, generated in the fuel chamber side catalyst electrode layer 4 simultaneously with the proton, moves to the oxidizing agent chamber side catalyst electrode layer 5 through the external load circuit, so that it is possible to use the energy from the above reaction as an electric energy.

In the solid polymer type fuel cell wherein the cation-exchange type electrolyte membrane is used for a solid electrolyte membrane, a perfluorocarbon sulfonic acid resin membrane is most commonly used as the cation-exchange type electrolyte membrane. However, in the cation-exchange type fuel cell using the perfluorocarbon sulfonic acid resin membrane, the following big problems are identified: only a noble metal catalyst is usable due to the strongly acidic reaction field, and the perfluorocarbon sulfonic acid resin membrane is also expensive, so that there are limitations in cost reduction.

Then, it has been examined to use an anion-exchange membrane instead of perfluorocarbon sulfonic acid resin membrane, and several of such solid polymer type fuel cells have been already proposed (Patent Articles 1 to 4). In the fuel cell with the anion-exchange membrane, reaction field is basic, so that it is believed that catalysts except for noble metal can be used. In this case, a mechanism for generating electric energy in the solid polymer type fuel cell is different in ion species moving in the solid polyelectrolyte membrane 6 as below. Namely, hydrogen or methanol and the like is supplied into the fuel chamber side, and oxygen and water are supplied into the oxidizing agent chamber side, so that the catalyst included in the electrode is contacted with the oxygen and water in the oxidizing agent chamber side catalyst electrode layer 5 to generate hydroxide ion. The hydroxide ion conducts in the solid polyelectrolyte membrane 6 formed by an anion-exchange membrane to move into the fuel chamber 7 and reacts with the fuel in the fuel chamber side catalyst electrode layer 4 to generate water. An electron generated as a result of the reaction in the fuel chamber side catalyst electrode layer 4 moves into the oxidizing agent chamber side catalyst electrode layer 5 through the external load circuit, so that the reaction energy is used as an electric energy.

In the solid polymer type fuel cell using an anion-exchange membrane, it is also expected to considerably inhibit crossover of methanol and the like as fuel permeating from the fuel chamber side to the oxidizing agent chamber side, which causes a further problem when using cation-exchange membrane, particularly when using the above-mentioned perfluorocarbon sulfonic acid resin membrane. Furthermore, because atmospheres of both electrodes are different and the range of selectable catalyst types is expanded, for example, it is expected that overvoltage of oxygen reduction can be lowered, fuel containing carbon-carbon bond can be used, and fuel voltage can be improved by selecting an oxidizing agent side catalyst inactive to crossover.

The catalyst electrode layers 4 and 5 formed on the anion-exchange membrane (solid polyelectrolyte membrane 6) is formed by using an application liquid including an electrode catalyst and solvent. In this case, the application liquid may be applied directly onto the solid electrolyte membrane 6, or the application liquid may be applied on release paper and dried followed by transfer of the obtained electrode layer onto the solid electrolyte membrane 6. Furthermore, for increasing availability of hydroxide ion generated on the catalyst within the oxidizing agent chamber side catalyst electrode layer (i.e. for moving the hydroxide ion efficiently to the fuel chamber), an ion-conductivity providing agent comprised of an anionic conductive resin may be included in the catalyst electrode layer, or may be applied for impregnation in the form of organic solution onto the joined surface of the formed electrode layer with the anion-exchange membrane.

For the ion-conductivity providing agent, there can be used anion-exchange resin obtained by amination of chloromethylated copolymer of aromatic polyether sulfone and aromatic polythioether sulfone (Patent Document 1 and Patent Document 2); or quatemarized polymer obtained by treating an end of perfluorocarbon polymer having sulfonic group with diamine or polymer such as quatemarized polychloromethylstyrene, which is preferably solvent-soluble (Patent Document 3).

Furthermore, for improving joining property between the anion-exchange membrane 6 and the catalyst electrode layers 4 and 5 to improve long-term durability, Patent Document 4 proposes an ion-conductivity providing agent having anion-exchange group in its molecule, comprised of hydrocarbon-based elastomer hardly-soluble in water and methanol, or the solution or suspension thereof. The anion-exchangeable hydrocarbon-based elastomer disclosed in Patent Document 4 can be obtained by treating hydrocarbon-based elastomer, such as polystyrene-poly(ethylene-butylene)-polystyrene triblock copolymer (SEBS) and polystyrene -poly(ethylene-propylene)-polystyrene triblock (SEPS), with chloromethyl methyl ether and the like for chloromethylation, followed by treatment with trimethylamine and the like for quaternarization, and can be used by dissolving in organic solvent. The anion-exchangeable hydrocarbon-based elastomer obtained by this method has a quaternary ammonium base as the anion-exchange group and a counterion of the quaternary ammonium base is a chloride ion. Also, counterions of the anionic conductive resins used in the above-mentioned Patent Documents 1 to 3 are halogeno ion such as chloride ion due to the manufacturing methods.

Then, when using the ion-conductivity providing agent, including anionic conductive resin (hereinafter the anionic conductive resin may also be referred to as "chlorine-type ion conductive resin") having a chloride ion as its counterion, for the catalyst electrode layer as in Patent Documents 1 to 4, catalyst poisoning due to the chloride ion may be of concern. Also, in the produced solid polymer type fuel cell, the chloride ion may increase internal resistance of a battery cell as a competitive conducting species against the conducting hydroxide ion in the catalyst electrode layer and electrolyte membrane, and reduce concentration of the hydroxide ion as an electrode reacting species, so that the fuel cell output may be lowered. For eliminating the catalyst poisoning and increasing the concentration of the hydroxide ion which is an electrode reacting species as well as a conducting species under these circumstances, it is extremely preferable to use this after the counterion of the anionic conductive resin used for the above ion-conductivity providing agent is previously ion-exchanged from chloride ion to the hydroxide ion (hereinafter the anionic conductive resin may also be referred to as "OH-type anionic conductive resin"). For this method, there may be mentioned a method to impregnate the produced chlorine-type anionic conductive resin with sodium hydroxide (NaOH) solution.

[Patent Document 1] The Japanese Unexamined Patent Publication H11-135137

[Patent Document 2] The Japanese Unexamined Patent Publication H11-273695

[Patent Document 3] The Japanese Unexamined Patent Publication 2000-331693

[Patent Document 4] The Japanese Unexamined Patent Publication 2002-367626

DISCLOSURE OF INVENTION

PROBLEM TO BE SOLVED BY THE INVENTION

However, sodium hydroxide (NaOH) is a strongly basic deleterious substance, so that it requires careful handling from safety and other standpoints for ion-exchanging procedure using the above sodium hydroxide solution.

Also, the OH-type anionic conductive resin produced by using the strongly basic solution shows slightly lower ion-exchange capacity than in the initial chlorine-type anionic conductive resin, which causes difficulty to stably produce the ion-conductivity providing agent having constant effect for giving ion conductivity. This can be estimated that a part of the quaternary ammonium base is degraded at the above impregnation with the sodium hydroxide solution because of its severe environment.

Therefore, for an ion-conductivity providing agent for catalyst electrode layer in the anion-exchange membrane type fuel cell, it is favorable to use OH-type as its counterion of the anionic conductive resin, instead of chlorine-type, but the ion-exchanging procedure is not yet satisfactory.

MEANS FOR SOLVING THE PROBLEM

In view of the above situation, the present inventors have variously carried out studies on ion exchange of a counterion of chlorine-type anionic conductive resin produced as the above ion-conductivity providing agent. As a result, it has been found that the above OH-type anionic conductive resin obtained by ion exchange using the sodium hydroxide solution is unstable as it stands and that this resin absorbs carbon dioxide in the atmosphere to rapidly replace the counterion from OH- to $CO_3^{2-}$, followed by further replacement from the $CO_3^{2-}$ to $HCO_3^-$. The replacement of the counterion from OH- to $HCO_3^-$ is done at a rate to complete replacing about 90% or more of counterions for 10 hours when the resin is left at room temperature in the atmosphere. From the findings, it was confirmed that the above OH-type anionic conductive resin obtained by ion exchange has $HCO_3^-$ as the majority of its counterions in the beginning of its actual use.

Also, it was found that even in the case of the anionic conductive resin having $CO_3^{2-}$ or $HCO_3^-$ as its counterion, the counterions such as $CO_3^{2-}$ and $HCO_3^-$ are rapidly ion exchanged again by OH- generated in the oxidizing agent chamber side electrode reaction and released outside the cell in the form of carbon dioxide during power generation in the obtained fuel cell when the resin is included in the catalyst electrode layer as the ion-conductivity providing agent. Namely, due to the further replacement of the counterions in operation of the fuel cell, the fuel cell in operation results in showing high ion conductivity and electrode reactivity even when including the above $CO_3^{2-}$-type or $HCO_3^-$-type anionic conductive resin in the catalyst electrode layer. Note that when operating the fuel cell without replacement of the counterion from chloride ion as in prior arts, the counterions are substantially never ion exchanged by hydroxide ion generated in the electrode reaction because the chloride ion cannot be released outside the cell.

Based on the above findings, the present inventors has reviewed the ion exchange of the counterion of the chlorine-type anionic conductive resin in the above ion-conductivity providing agent for catalyst electrode layer, and found that it is possible to solve all the above-mentioned problems by bringing into contact with carbonate solution and/or bicarbonate solution to directly ion exchange the counterion of the chlorine-type anionic conductive resin into the $CO_3^{2-}$-type or $HCO_3^-$-type without ion exchanging it to OH-type by using sodium hydroxide solution, so that the present invention came to be completed.

Namely, according to the present invention, there is provided a method for producing an ion-conductivity providing agent for a catalyst electrode layer in an anion-exchange membrane type fuel cell, comprising: producing anionic conductive resin including a quaternary ammonium base or quaternary phosphonium base having a halogeno ion as its counterion, and bringing the anionic conductive resin into contact with carbonate solution and/or bicarbonate solution to obtain anionic conductive resin in which at least a part of the counterions of said quaternary ammonium base or quaternary phosphonium base is $CO_3^{2-}$ and/or $HCO_3^-$.

EFFECTS OF THE INVENTION

According to the method for producing an ion-conductivity providing agent of the present invention, instead of first converting chlorine ion into OH type and then further converting to $CO_3^{2-}$ and/or $HCO_3^-$ (hereinafter these counterion types may also be abbreviated as "carbonate type") by absorbing carbon dioxide in the atmosphere, the chlorine ion can be directly converted into the carbonate type for the anionic conductive resin including a quaternary ammonium base or quaternary phosphonium base normally produced to have chlorine-type counterion. The conversion of the counterion from the chlorine-type to carbonate type can be conducted by using a weakly basic solution of carbonate or bicarbonate, so that it is possible to greatly improve operational safety and certainty compared to the conversion to OH type with the use of deleterious substance such as sodium hydroxide.

Furthermore, since the conversion of the counterion can be done in a mild environment by using the weakly basic solution, stress to the anionic conductive resin can be reduced, and particularly, it is possible to considerably suppress degradation of the quaternary ammonium base or quaternary phosphonium base both of which are slightly inferior in stability under the strongly basic environment. Consequently, anion-exchange capacity of the chlorine-type anion-exchange resin used in the production can be maintained without change, and greatly contribute for stably producing anion-exchange resin with desired ion conductivity. Note that even when directly obtaining carbonate type anionic conductive resin without conversion to OH type, the counterions such as $CO_3^{2-}$ and $HCO_3^-$ can be released outside the cell in the form of carbon dioxide when using the fuel cell by rapidly ion exchange again due to OH- generated in the oxidizing agent chamber side electrode reaction as in the case of obtaining the carbonate type by absorbing carbon dioxide in the atmosphere after conversion to the OH type. Therefore, it shows sufficient hydroxide ion conductivity and electrode reactivity, and a fuel cell produced by using catalyst electrode layer including this resin operates with high output. BRIEF DESCRIPTION OF THE DRAWINGS

FIG. 1 is a conceptual diagram showing a basic structure of a solid polymer type fuel cell.

BEST MODE FOR WORKING THE INVENTION

In the present invention, anionic conductive resin including a quaternary ammonium base or quaternary phosphonium base having a halogeno ion as its counterion is first produced (hereinafter the anionic conductive resin may be referred to as "halogen type anionic conductive resin"). As the quaternary ammonium base, there may be mentioned a trialkylammonium base such as trimethylammonium base, triethylammonium base, tripropylammonium base, tributylammonium base, trioctylammonium base, diethylmethylammonium base, dipropylmethylammonium base, dibutylmethylammonium base, dimethylethylammonium base and methyldi(hydroxyethyl) ammonium base, and an alkylpyridinium base such as methylpyridinium base, ethylpyridinium base, propylpyridinium base and butylpyridinium base; and because of stability and ease of reaction, trimethylammonium base, triethylammonium base, dibutylmethylammonium base, methylpyridinium base, ethylpyridinium base and butylpyridinium base are preferable. On the other hand, the quaternary phosphonium base includes triphenylphosphonium base, tripropylphosphonium base, tributylphosphonium base, trioctylphosphonium base, etc., and because of stability and ease of reaction, triphenylphosphonium base and tributylphosphonium base are preferable.

Process for obtaining the anionic conductive resin having halogeno ion as its counterion is not limited and any process to satisfy the above requirements may be applicable. Normally, any one selected from the following methods a) to c) is adopted.

[Method a) for reacting resin having halogenoalkyl group with an agent having a tertiary amino group for forming quaternary ammonium, or an agent having a tertiary phosphine group for forming quaternary phosphonium]

In the method a), as a halogenoalkyl group, chloromethyl group, chloroethyl group, chloropropyl group, chlorobutyl group, chloropentyl group, chlorohexyl group, bromomethyl group, bromoethyl group, bromopropyl group, bromobutyl group, bromopentyl group, bromohexyl group, iodomethyl group, iodoethyl group, iodobutyl group, or a combination thereof may be illustrated; and as resin having a halogenoalkyl group, there may be mentioned resin in which the above halogenoalkyl group is introduced in any known polymeric compound including, for example, engineering plastics such as polystyrenes, polysulfone, polyphenylene oxide, polyether sulfone and polyether ether ketone, and the after-mentioned hydrocarbon-based elastomers. Specifically, the resin having a halogenoalkyl group may include polychloromethylstyrene, poly(styrene-chloromethylstyrene) copolymer, polybromoethyl styrene, bromobutyl styrene, chloromethylated polysulfone, chloromethylated polyphenylene oxide, chloromethylated polyether ether ketone, after-mentioned chloromethylated hydrocarbon-based elastomers and the like.

Among these, as the halogenoalkyl group, chloromethyl group, chloroethyl group, chloropropyl group, chlorobutyl group, bromoethyl group and bromobutyl group are preferable because of ease of introduction and availability of raw materials, and chloromethyl group and bromobutyl group are more preferable. Also, as raw material resin for the resin in which the halogenoalkyl group can be introduced, polystyrenes and hydrocarbon-based elastomers having a polystyrene segment are preferable because of availability of raw materials.

The resin having a halogenoalkyl group may be commercially available resin, or can be obtained by introducing a halogenoalkyl group into the above-mentioned raw material resin by any known method, by which the present invention is not limited. Common methods may be applicable, and for example, the resin can be obtained by dissolving raw material resin in an organic solvent such as chloroform and adding chloromethyl methyl ether and a catalyst such as zinc chloride and tin chloride to the obtained solution for reaction at 20 to 50°C for 0.5 to 10 hours when introducing a chloromethyl group.

In the method a), the anionic conductive resin including quaternary ammonium base or quaternary phosphonium base having a halogeno ion as its counterion is obtained through reaction of the above resin having a halogenoalkyl group with the agent having a tertiary amino group for forming quaternary ammonium or the agent having a tertiary phosphine group for forming quaternary phosphonium. Specific examples of the agent having a tertiary amino group for forming quaternary ammonium may include trimethylamine, triethylamine, dimethylaminoethanol and the like, or a combination thereof, and among the above examples, because of high reactivity, trimethylamine is most preferable. Also, specific examples of the agent having a tertiary phosphine group for forming quaternary phosphonium may include triphenylphosphine, tripropylphosphine, tributylphosphine and the like, or a combination thereof, and triphenylphosphine and tributylphosphine are most preferable because of high reactivity and stability of the product.

Process and conditions for the quaternarizing reaction may be properly selected depending on the type of the resin having halogenoalkyl group, aminating agent or the agent for forming quaternary phosphonium, and normally, the resin having a halogenoalkyl group can be dissolved in an organic solvent such as chloroform at a concentration of 1 to 30 mass% followed by adding 0.2 to 2-time more moles of the agent for forming quaternary ammonium or the agent for forming quaternary phosphonium with respect to the halogenoalkyl group for reaction at 5 to 50°C for 0.5 to 10 hours. The resin having a halogenoalkyl group may be dispersed in organic solvent such as acetone instead of dissolving the same in organic solvent at the reaction.

Through the above reaction, halogen type anionic conductive resin can be obtained. Note that halogeno ion in the obtained halogen type anionic conductive resin is a counterion directly derived from halogeno ion of the used resin having a halogenoalkyl group, and that anion-exchange group corresponds to the used halogenoalkyl group and the agent for forming quaternary ammonium or agent for forming quaternary phosphonium.

In the method a), for the halogen type anionic conductive resin, a halogen type anion conductive hydrocarbon-based elastomer produced by the following method is particularly preferable.

In the method for producing the halogen type anion conductive hydrocarbon-based elastomer, a hydrocarbon-based elastomer which is resin having a halogenoalkyl group or resin introducible of a halogenoalkyl group (hereinafter may simply be referred to as hydrocarbon-based elastomer) is first obtained by the following method. Namely, the method includes polymerizing a monomer having a functional group introducible of a halogenoalkyl group or monomer having a halogenoalkyl group, and conjugated diene compound, followed by treatment for introducing the halogenoalkyl group in case of using the monomer having a functional group introducible of a halogenoalkyl group.

Particularly in the method a), the following method is preferable such that block copolymerization is done by using many different types of monomers for forming hard segment and soft segment as the monomer having a functional group introducible of a halogenoalkyl group or monomer having a halogenoalkyl group and conjugated diene compound (normally the polymerized block of aromatic vinyl compound forms the hard segment and the polymerized block of the conjugated diene compound forms the soft segment) to obtain so-called thermoplastic elastomer, followed by treatment for introducing the halogenoalkyl group in case of using the monomer having a functional group introducible of a halogenoalkyl group.

As the monomer having a functional group introducible of a halogenoalkyl group used in the above method, aromatic vinyl compound such as styrene, α-methylstyrene and vinylnaphthalene may be mentioned, and styrene and α-methylstyrene are preferably used because of ease of introduction of the halogenoalkyl group. For a method for introducing the halogenoalkyl group into the monomer having a functional group introducible of halogenoalkyl group, common method may be applicable, and for example, a chloromethyl group can be introduced by dissolving the monomer in an organic solvent such as chloroform and adding chloromethyl methyl ether and a catalyst, such as zinc chloride and tin chloride, to the obtained solution for reaction at 20 to 50°C for 0.5 to 10 hours.

Also, as the monomer having a halogenoalkyl group, chloromethylstyrene, chloroethylstyrene, chloropropylstyrene, chlorobutylstyrene, bromomethyl styrene, bromoethyl styrene, bromopropyl styrene, bromobutyl styrene and the like can be used.

As the conjugated diene compound used in the above method, there may be mentioned butadiene, isoprene, chloroprene, 1,3-pentadiene, 2,3-dimethyl-1,3-butadiene, etc. The content is not particularly limited, and the content rate of conjugated diene compound units in the hydrocarbon-based elastomer is in general 5 to 75 mass%, particularly 10 to 50 mass%.

Note that in addition to the above monomer having a functional group introducible of halogenoalkyl group or monomer having a halogenoalkyl group and conjugated diene compound, a crosslinkable monomer copolymerizable to these monomers may be added if desired. The crosslinkable monomer, although not particularly limited, for example, may include a polyfunctional vinyl compound such as divinylbenzenes, divinyl sulfone, divinyl biphenyl and trivinyl benzene, and a polyfunctional methacrylic acid derivative such as trimethylolmethane trimethacrylate ester, methylenebisacrylamide and hexamethylene dimethacryl amide. When using the crosslinkable monomer, the amount used is generally 0.01 to 5 parts by mass, preferably 0.05 to 1 part by mass, per 100 parts by mass of the monomer having a functional group introducible of a halogenoalkyl group or monomer having a halogenoalkyl group. When the amount of the crosslinkable monomer is 0.01 parts by mass or less, the obtained anion conductive hydrocarbon-based elastomer tends to be soluble in water, and when the amount is 5 mass% or more, the obtained elastomer may tend to be insoluble in organic solvent.

Note that in addition to the above monomer having a functional group introducible of a halogenoalkyl group or monomer having a halogenoalkyl group, conjugated diene compound and crosslinkable monomer, other monomers copolymerizable to these monomers may be added if desired. As the other monomers, for example, a vinyl compound such as ethylene, propylene, butylene, acrylonitrile, vinyl chloride and acrylic acid ester can be used. The amount used is preferably 0 to 100 parts by mass per 100 parts by mass of the monomer having a functional group introducible of a halogenoalkyl group or monomer having a halogenoalkyl group.

A polymerization procedure in the above method may be known polymerization procedure such as solution polymerization, suspension polymerization and emulsion polymerization. The production conditions may depend on the constitution of monomer compositions, cannot particularly be limited, and may properly be selected. For example, in case of the above-mentioned monomers such as styrene, it is preferable to polymerize with polymerization conditions so as to obtain an average molecule weight of 10,000 to 100,000, preferably 50,000 to 200,000. When using the monomer having a halogenoalkyl group, it is possible to obtain a hydrocarbon-based elastomer having a halogenoalkyl group to be used in the present invention by polymerizing in this way. Also, when using the monomer having a functional group introducible of a halogenoalkyl group, a polymer obtained according to the above polymerization procedure may be subject to introduction of a halogenoalkyl group as previously explained.

Also, when using the thermoplastic elastomer as the halogen type anionic conductive resin, a combination of monomers to be copolymerized may be determined in accordance with common synthesis process for a thermoplastic elastomer, followed by polymerization by common method. Specific examples for the thermoplastic elastomer introducible of a halogenoalkyl group may include polystyrene-polybutadiene-polystyrene triblock copolymer (SBS), polystyrene-polyisoprene-polystyrene triblock copolymer (SIS) as well as those respectively obtained by hydrogenation of SBS and SIS, i.e. polystyrene-poly(ethylene-butylene)-polystyrene triblock copolymer (SEBS) and polystyrene-poly(ethylene-propylene)-polystyrene triblock copolymer (SEPS); and specific examples for the thermoplastic elastomer having a halogenoalkyl group may include polystyrene-polychloromethylstyrene-polybutadiene triblock copolymer, polystyrene-polychloromethylstyrene-polyisoprene triblock copolymer and the like, so that the monomer combination to give such a copolymer may be employed. Note that polystyrene-poly(ethylene-butylene)-polystyrene triblock copolymer (SEBS) and polystyrene-poly(ethylene-propylene)-polystyrene triblock copolymer (SEPS) are preferable for the thermoplastic elastomer introducible of a halogenoalkyl group, in view of stability in the step for introducing a halogenoalkyl group.

Also, the monomer constitution for the polymerization is not particularly limited, and can preferably be selected such that aromatic vinyl compound units in block copolymer to become hard segment in the thermoplastic elastomer have a content rate of preferably 5 to 70 mass%, particularly preferably 10 to 50 mass%, in view of electric property and mechanical property.

Also, a method for copolymerizing the aromatic vinyl compound and conjugated diene compound is not particularly limited, and a known method such as anion polymerization, cation polymerize, coordination polymerization and radical polymerization can be used. Living anion polymerization is particularly preferably used because it is easy to control a block structure. Note that the form of the block copolymerization may be any one of diblock copolymerization, triblock copolymerization, radial block copolymerization and multiblock copolymerization, and triblock copolymerize is preferable for a reason of easily providing resistance to dissolving in water, methanol and the like, and solubility to an organic solvent because end blocks easily agglutinate each other and form a domain. For the same reasons, it is also preferable to polymerize with polymerization conditions such that an average molecule weight of each block segment of the block copolymer is preferably 10,000 to 300,000, particularly preferably 20,000 to 150,000. Furthermore, it is preferable to add hydrogen so as to have its hydrogenation rate of 95% or more when hydrogenating a portion of the conjugated diene in the block copolymer.

In the method for producing a halogen type anion conductive hydrocarbon-based elastomer, the aminating agent having a tertiary amino group or agent having a tertiary phosphine group for forming phosphonium is then reacted with the hydrocarbon-based elastomer having a halogenoalkyl group by a method similar to the one previously explained, so that a halogen type anion conductive hydrocarbon-based elastomer can be obtained.

[Method b) for reacting resin having an amino group or phosphine group with alkylating agent having a halogenoalkyl group]

Resin used in the method b) can be similar to the resin used in the above method a) except for having an amino group or phosphine group instead of a halogenoalkyl group. The amino group may be a tertiary amino group, or a secondary or primary amino group, and the tertiary amino group is particularly preferable. Similarly, the phosphine group may be a tertiary phosphine group, or a secondary or primary phosphine group, and the tertiary phosphine group is particularly preferable.

As the tertiary amino group, for example, there may be mentioned dimethylamino group, diethylamino group, dipropyl amino group, dibutyl amino group, di(hydroxylethyl) amino group, di(hydroxylpropyl) amino group, di(hydroxylbutyl) amino group, pyridyl group, etc. The resin having such a tertiary amino group can be produced by properly polymerizing monomers having a tertiary amino group by a known method. For the monomer having a tertiary amino group, for example, there may be mentioned allyldimethylamine, allyldiethylamine, allyldipropylamine, allyldibutylamine, allyl-di(hydroxyethyl)amine, dimethylamino styrene, diethylamino styrene, vinylpyridine, vinylpyrazine, vinylimidazole, etc. A polymerization procedure for the monomers is not particularly limited, and a known method such as anion polymerization, cation polymerization, coordination polymerization and radical polymerization may be employed. The resin having a tertiary amino group may specifically include polyvinylpyridine, polyvinylpiperazine, dimethylpolyaniline, polyallyldimethylamine and the like.

Also, as the secondary amino group, for example, there may be mentioned N-methylamino group, N-ethylamino group, N-propylamino group, N-butylamino group, N-hydroxylethylamino group, N-hydroxylpropylamino group, N-hydroxylbutylamino group, pyrrolidyl group, etc. The resin having such a secondary amino group can be produced by polymerizing monomers having a secondary amino group. For the monomer having a secondary amino group, for example, there may be mentioned N-allylmethylamine, N-allylethylamine, N-allylpropyl amine, N-allylbutyl amine, N-allylhydroxyethylamine, N-methylamino styrene, N-ethylamino styrene, 2-vinylpyrrolidine, 3-vinylpyrrolidine, etc. The resin having a secondary amino group may specifically include poly(N-allylmethylamine), poly(N-allylethylamine), poly(N-methylamino styrene), polyvinylpyrrolidine and the like.

Also, as the primary amino group, an amino group may be mentioned. The resin having such a primary amino group can be produced by polymerizing monomers having a primary amino group. For the monomer having a primary amino group, for example, there may be mentioned vinylamine, allylamine, amino methylstyrene, aniline, etc. The resin having a primary amino group may specifically include polyvinylamine, polyallylamine, polyamino methylstyrene, polyaniline and the like.

On the other hand, as the tertiary phosphine group, for example, there may be mentioned diphenylphosphine group, dipropylphosphine group, dibutylphosphine group, etc. The resin having such a tertiary phosphine group can be produced by polymerizing monomers having a tertiary phosphine group as with the above-mentioned resin having a tertiary amino group. For the monomer having a tertiary phosphine group, for example, there may be mentioned allyldiphenylphosphine, allyldipropyl phosphine, allyldibutyl phosphine, vinylbenzdipropyl phosphine, etc. The resin having a tertiary phosphine group may specifically include polyallyldipropyl phosphine, polyallyldibutyl phosphine, polyallyldiphenylphosphine and the like.

Also, as the secondary phosphine group, for example, there may be mentioned phenylphosphine group, propylphosphine group, butylphosphine group, etc. The resin having such a secondary phosphine group can be produced by polymerizing monomers having a secondary phosphine group. For the monomer having a secondary phosphine group, for example, there may be mentioned allylphenylphosphine, allylpropyl phosphine, allylbutyl phosphine, vinylbenzylpropyl phosphine, etc. The resin having a secondary phosphine group may specifically include polyallylpropyl phosphine, polyallylbutyl phosphine and the like.

Also, as the primary phosphine group, a phosphine group may be mentioned. The resin having such a primary phosphine group can be produced by polymerizing monomers having a primary phosphine group. For the monomer having a primary phosphine group, for example, there may be mentioned phosphinoallyl, phosphino styrene, etc. The resin having a primary phosphine group may specifically include polyphosphinoallyl, polyphosphino styrene and the like.

In the method b), the above resin is reacted with an alkylating agent having a halogenoalkyl group to generate anionic conductive resin including a quaternary ammonium base or quaternary phosphonium base having a halogeno ion as its counterion. Specific examples for the alkylating agent having a halogenoalkyl group may include methyl chloride, ethyl chloride, propyl chloride, isopropyl chloride, butyl chloride, chlorobenzene, chloromethylbenzene, methyl bromide, ethyl bromide, propyl bromide, isopropyl bromide, butyl bromide, bromobenzene, bromomethylbenzene, methyl iodide, ethyl iodide and the like.

Process and conditions for the alkylation reaction may be properly selected depending on the type of the used resin and alkylating agent. Normally, the reaction can be conducted by dissolving the resin having an amino group or phosphine group in an organic solvent such as methanol and acetone at a concentration of 1 to 30 mass% and adding 0.2 to 5.0-time more mole of the alkylating agent having a halogenoalkyl group with respect to the amino group or phosphine group for reaction at 5 to 50°C for 0.5 to 100 hours. The resin having a tertiary amino group or tertiary phosphine group may be immersed in 0.5 to 50 mass% of methanol or acetone solution of the alkylating agent instead of dissolving the same in organic solvent for reaction at 5 to 50°C for 0.5 to 100 hours.

Through the above alkylation reaction, halogen type anionic conductive resin can be obtained. Note that halogeno ion in the obtained halogen type anionic conductive resin is a counterion directly derived from a halogeno ion of the used alkylating agent having a halogenoalkyl group, and that anion-exchange group corresponds to the used resin having an amino group or phosphine group and the alkylating agent.

Also, in the method b), for the halogen type anionic conductive resin, a halogen type anion conductive hydrocarbon-based elastomer produced by the following method is particularly preferable.

In the method for producing the halogen type anion conductive hydrocarbon-based elastomer, a hydrocarbon-based elastomer having an amino group or phosphine group (hereinafter may simply be referred to as hydrocarbon-based elastomer) is first obtained in accordance with the method for producing a hydrocarbon-based elastomer having a halogenoalkyl group in the above method a). Namely, the method includes polymerizing a monomer having a functional group introducible of an amino group or phosphine group or monomer having an amino group or phosphine group, and conjugated diene, followed by treatment for introducing the amino group or tertiary phosphine group in case of using the monomer having a functional group introducible of an amino group or phosphine group. Preferably, the monomer having a tertiary amino group or phosphine group and conjugated diene compound are polymerized to obtain the above hydrocarbon-based elastomer.

In this case, for the monomer having an amino group and the monomer having a phosphine group, the above-mentioned monomers can be used, and the monomer having a tertiary amino group and the monomer having a tertiary phosphine group are preferably used.

Thus-obtained hydrocarbon-based elastomer having an amino group or phosphine group is subject to alkylation reaction as described above, and a halogen type anion conductive hydrocarbon-based elastomer can be obtained.

[Method c) for polymerizing a polymerizable composition containing a polymerizable monomer including a quaternary ammonium base or quaternary phosphonium base having a halogeno ion its counterion]

In the method c), the polymerizable monomer including a quaternary ammonium base or quaternary phosphonium base having a halogeno ion as its counterion may be a commercialized product without modification or can be obtained by various methods. For example, it is obtained through reaction of a monomer having a halogenoalkyl group, an agent having a tertiary amino group for forming quaternary ammonium or agent having a tertiary phosphine group for forming quaternary phosphonium.

As examples of the monomer having a halogenoalkyl group may include chloromethylstyrene, bromoethyl styrene, bromobutyl styrene, allyl chloride, allyl bromide and the like. In view of reactivity, chloromethylstyrene is preferable. For a method for reaction of the monomer having a halogenoalkyl group with the above agent for forming quaternary ammonium or agent for forming quaternary phosphonium, a method pursuant to the method for reaction of an elastomer having a halogenoalkyl group for anionic conductive resin with the above agent as explained in the above method a) may be applicable.

For a method for polymerizing the monomers having a quaternary ammonium base or quaternary phosphonium base having a halogeno ion as its counterion to generate anionic conductive resin, similar methods may be applicable as with the method for polymerizing the monomers having a functional group introducible of a halogenoalkyl group or the monomers having a halogenoalkyl group as explained in the above method a).

Through the above methods a) to c), anionic conductive resin having a quaternary ammonium base or quaternary phosphonium base having a halogeno ion as its counterion can be obtained.

Note that anion-exchange capacity of the halogen type anionic conductive resin is not particularly limited, and may preferably be 0.1 to 5.0 mmol/g, more preferably 0.5 to 3.0 mmol/g. When the anion-exchange capacity is less than 0.1 mmol/g, ion conductivity of the anionic conductive resin may be insufficient; and when it exceeds 5.0 mmol/g, the resin may be dissolved in water or fuel such as methanol.

Also, it is preferable that the halogen type anionic conductive resin is hardly soluble in water. In case that it is easily dissolved in water, the anionic conductive resin may be eluted from a catalyst electrode layer when used for a fuel cell, resulting in lowering battery performance. Note that "being hardly soluble in water" here means that solubility to water at 20°C (concentration of the above anionic conductive resin in saturated aqueous solution) is less than 1 wt%, preferably 0.8 wt% or less.

Furthermore, weight average molecule weight of the halogen type anionic conductive resin is preferably 10,000 to 1,000,000, more preferably 50,000 to 200,000. When it is 10,000 or less, resistance to dissolving in water or fuel such as methanol may be lowered; and on the other hand, when it is 1,000,000 or more, it is difficult to obtain a solution thereof.

In addition, the halogen type anionic conductive resin is, considering that the anion-exchange membrane is normally hydrocarbon-based, preferably hydrocarbon-based resin for better adhesiveness of a catalyst electrode layer to the anion-exchange membrane.

Note that when the halogen type anionic conductive resin is the halogen type anion conductive hydrocarbon-based elastomer, it is preferable to show proper degree of elasticity, preferably 1 to 300(MPa), particularly preferably 3 to 100(MPa), in Young's modulus at 25°C in addition to the above-mentioned properties of the halogen type anionic conductive resin. Such a degree of elasticity allows not only improving adhesiveness between the solid polyelectrolyte membrane and catalyst electrode layer, but also dispersing stress generated due to heat cycle when used for a fuel cell, so that it is possible to greatly improve durability of the fuel cell.

Thus-obtained halogen type anionic conductive resin is properly precipitated and filtrated to obtain a solidified product followed by drying by known methods. In the drying step, it is preferable to dry at a temperature of preferably less than 60°C, more preferably less than 40°C, so as to prevent insufficient solubility to an organic solvent because it is finally used in a solution of an organic solvent.

In the present invention, the above halogen type anionic conductive resin is then brought into contact with carbonate solution and/or bicarbonate solution to ion exchange to anionic conductive resin in which at least a part of counterions is $CO_3^{2-}$ and/or $HCO_3^-$. Any known carbonate can be used for the carbonate solution without limitation, and specific examples may include sodium carbonate, potassium carbonate, potassium sodium carbonate, ammonium carbonate, etc. Also, any known bicarbonate can be used for the bicarbonate solution without limitation, and specific examples may include sodium hydrogen carbonate, potassium hydrogen carbonate, ammonium hydrogen carbonate, etc. The solvents for dissolving the carbonate and bicarbonate may be, in addition to water, lower alcohol solution such as methanol and ethanol, and a mixed solution of water and lower alcohol. Considering that it can be further converted to $HCO_3^-$ type in the atmosphere even when the counterion is converted to $CO_3^{2-}$ type as described above, bicarbonate solution is preferable among the above carbonate solution and bicarbonate solution because bicarbonate solution is more weakly basic, and particularly, this allows ion-exchanging in milder environment and more greatly controlling degradation of the quaternary ammonium base or quaternary phosphonium base. Because of ease of preparation and ease of proceeding of ion exchange, aqueous solutions of sodium hydrogen carbonate and potassium hydrogen carbonate are most preferable.

In the carbonate solution and bicarbonate solution, concentrations of carbonate and bicarbonate are not particularly limited, and are normally 0.05 to 2 mol/L, preferably 0.1 to 1 mol/L, for rapidly and sufficiently ion-exchanging the halogeno ion. Temperature for contacting with the carbonate solution and bicarbonate solution is normally 5 to 80°C, preferably 20 to 60°C. Contact time is normally 0.5 to 20 hours, preferably 1 to 10 hours, and common contact method comprises immersing anionic conductive resin to be reacted in the carbonate solution and bicarbonate solution. In this immersion, large excess of the carbonate solution and bicarbonate solution may be used with respect to the anionic conductive resin to be reacted, and generally, it is preferable to use 1 to 100 times more weight of the carbonate solution and bicarbonate solution than the weight of the anionic conductive resin. Furthermore, a method is also preferable, in which ion exchange is repeated 2 to 5 times as the solution for contact is renewed.

By this contact with the carbonate solution and/or bicarbonate solution, at least a part of the counterions of the quaternary ammonium base or quaternary phosphonium base can be converted to $CO_3^{2-}$ and/or $HCO_3^-$. It is preferable to convert at least 70 mol% or more to these carbonate based ions for sufficient conductivity and electrode reactivity of the hydroxide ion, and particularly preferable to convert 90 mol% or more to the carbonate based ions.

Thus produced carbonate type anionic conductive resin is then filtrated and dried. For drying, it is preferable to dry at a temperature of preferably 60°C or less, more preferably 40°C or less, so as to prevent insufficient solubility to the organic solvent. Note that it is usual that a large part of the $CO_3^{2-}$ type counterion is converted into $HCO_3^-$ even when the carbonate solution is used in the above ion exchange operation to obtain $CO_3^{2-}$ type anionic conductive resin because adequate time may be taken for this operation. Even when the $CO_3^{2-}$ type anionic conductive resin is obtained, the remained amount of $CO_3^{2-}$ is normally 20 mol% or less in the total amount of $CO_3^{2-}$ and $HCO_3^-$ by exposure to the atmosphere under temperature equal to or higher than room temperature for at least 6 hours, and is lowered to 5 mol% or less particularly by exposure to the atmosphere for 15 hours.

The ion-conductivity providing agent including carbonate type anionic conductive resin obtained by the method of the present invention can normally be used in the form of resin solution obtained by dissolving it in an organic solvent.

The organic solvent used here is not particularly limited, and is preferably an organic solvent with low boiling point and permittivity of 10 or more because drying operation is easy when this solvent is used for a solution. Examples of the organic solvents may be ethanol, 1-propanol, 2-propanol, N-butanol, methylethylketone, acetonitrile, nitromethane, dimethylsulfoxide, N-methylpyrrolidone, N,N-dimethylformamide, N,N-dimethylacetamide, etc. As the anionic conductive resin, solubility to the organic solvent (concentration of the above anionic conductive resin in a saturated solution at 20°C) is preferably 1 mass% or more, particularly preferably 3 mass% or more. The concentration of the above anionic conductive resin in the solution is not particularly limited; may be properly determined depending on the combination of the solvent and the anionic conductive resin, amount used per the electrode catalyst, viscosity, permeability in use, etc.; and normally preferably 1 to 20 mass%, particularly preferably 1 to 15 mass%.

Also, it is possible to use the above anionic conductive resin in the form of suspension. The dispersion medium in this case is not particularly limited, and in addition to those among the above-mentioned organic solvents which cannot dissolve the above anionic conductive resin, water and methanol can be used. Content of the above anionic conductive resin in the suspension is not particularly limited, and is preferably as approximately same as the concentration thereof in the solution.

The ion-conductivity providing agent produced in the present invention can be used for the catalyst electrode layer in the anion-exchange membrane type fuel cell in order to increase ion (specifically ions, such as hydroxide ion, generated on the catalyst in the catalyst electrode layer) conductivity within or near the surface of the catalyst electrode layer. Usage is not particularly limited on the condition that the agent is contacted with at least electrode catalyst present around the joining surface to the solid polyelectrolyte membrane in the electrode catalyst included in the catalyst electrode layer. Normally, it may be used as with the ion-conductivity providing agent constituting the perfluorocarbon sulfonic acid resin in the solid polymer type fuel cell using the perfluorocarbon sulfonic acid resin membrane. For example, there may be mentioned (I) a method comprising: adding binding agent and dispersion medium, if desired, to the electrode catalyst to obtain paste composition, directly roll-forming or applying on supporting layer material such as carbon paper, thermally treating to obtain a layered product, applying solution of the ion-conductivity providing agent of the present invention for impregnating the joining surface to the anion-exchange membrane therewith, drying if desired, and thermally compressing the anion-exchange membrane and the above layered product in the joining surface; or (II) a method comprising: adding the ion-conductivity providing agent of the present invention as well as binding agent and dispersion medium if desired to the electrode catalyst to obtain paste composition, applying it on supporting layer material such as carbon paper, or applying it on peeling film to transfer it onto the anion-exchange membrane, or alternately, directly applying it on the anion-exchange membrane, followed by drying, and then, thermally compressing it with the anion-exchange membrane if desired; etc. In these methods, in view of making reaction site in the catalyst electrode layer a three-dimensional structure, it is more preferable to include the agent in broader range of the electrode. Among the above two methods, it is more preferable to employ the method (II) because it is easier to include the ion-conductivity providing agent in the entire electrode more uniformly.

Note that the ion-conductivity providing agent of the present invention may be applied to the catalyst electrode layer joined to at least one surface of the solid polyelectrolyte membrane, and due to effect for giving conductivity of hydroxide ion, it is preferable to apply to the oxidizing agent chamber side catalyst electrode layer when applying only one of the catalyst electrode layers. In this case, it is also preferable to apply other ion-conductivity providing agent to the fuel chamber side catalyst electrode layer. For the other ion-conductivity providing agents, any known agent can be used without limitation.

A variety of materials used in the above methods (I) and (II) are not particularly limited, and those used in a conventional polymer electrolyte type fuel cell can be used without any limitation. For example, as the solid polyelectrolyte membrane, a known anion-exchange membrane can be used without limitation, which is known to be used as a solid polyelectrolyte membrane for a polymer electrolyte type fuel cell. Especially, a hydrocarbon-based anion-exchange membrane is preferably used because it can control permeability of fuel, i.e. hydrogen gas and liquid fuel such as ethanol, and can be produced at a low cost. Preferable examples of the hydrocarbon-based anion-exchange membrane may include a membrane obtained by treatment such as amination and alkylation of chloromethylstyrene-divinylbenzene copolymer and a copolymer of vinylpyridine-divinylbenzene and the like to introduce the desired anion-exchange groups. These anion-exchange resin membranes are generally supported by base material such as woven fabric, unwoven fabric and porous membrane made from thermoplastic resin, and it is preferable to use base material comprising a porous membrane of thermoplastic resin such as polyolefin resin including polyethylene, polypropylene and polymethylpentene, and fluorinated resin such as polytetrafluoroethylene, poly(tetrafluoroethylene-hexafluoropropylene) and polyvinylidene fluoride because gas permeability is low and the membrane can be made thinner. Also, membrane thickness of the hydrocarbon-based anion-exchange membrane may be, in view of lowering electric resistance and giving necessary mechanical strength as a support membrane, normally 5 to 200 $\mu$m, more preferably 20 to 150 $\mu$m.

Also, known materials for a catalyst electrode layer can be used without particular limitation. Namely, as an electrode catalyst, metallic particle such as platinum, gold, silver, palladium, iridium, rhodium, ruthenium, tin, iron, cobalt, nickel, molybdenum, tungsten, vanadium or alloys thereof to facilitate oxidation reaction of hydrogen and reduction reaction of oxygen can be used without limitation, and it is preferable to use platinum group catalyst because of excellent catalyst activity.

Also, it is possible to use a variety of metallic oxides, which cannot be used in the case of conventional strongly acidic proton exchange membranes, as the electrode catalyst because of the use of the anion-exchange membrane. For example, perovskite oxide expressed by $ABO_3$, etc., excellent in oxidative activity, can also be preferably used. Specifically, in addition to $LaMnO_3$, $LaFeO_3$ $LaCrO_3$, $LaCoO_3$ $LaNiO_3$ and the like, perovskite oxides in which a part of the above A site is partly-substituted with Sr, Ca, Ba, Ce, Ag and the like, and perovskite oxides in which a part of B site is partly-substituted with Pd, Pt, Ru, Ag and the like can preferably be used as the electrode catalyst.

Note that particle diameter of the electrode catalyst may normally be 0.1 to 100 nm, more preferably 0.5 to 10 nm. The smaller particle diameter results in higher catalyst performance, but it is difficult to prepare those with a particle diameter of less than 0.5 nm while sufficient catalyst performance can hardly be obtained in those with a particle diameter of more than 100 nm. Note that the catalyst may be used after preliminarily supported by a conductive material. The conductive material may be any electron conducting substance and not particularly limited, and it is common to use, for example, carbon black such as furnace black and acetylene black, activated carbon, black lead and the like, either alone or in combination thereof. Content of the electrode catalyst can be normally 0.01 to 10 mg/cm$^2$ more preferably 0.1 to 5.0 mg/cm$^2$, in terms of the mass of the electrode catalyst per unit area when the catalyst electrode layer is sheet-shaped.

Also, a variety of thermoplastic resin can generally be used as the binding agent added if desired, and preferably used thermoplastic resin may include polytetrafluoroethylene, polyvinylidene fluoride, tetrafluoroethylene-perfluoroalkyl vinyl ether copolymer, polyether ether ketone, polyether sulfone, styrene butadiene copolymer, acrylonitrile butadiene copolymer, etc. Content of the binding agent can preferably be 5 to 25 wt% of the above catalyst electrode layer. Also, the binding agent may be used alone or in combination of 2 or more.

Also, porous carbon materials, such as carbon fiber woven fabric and carbon paper, can normally be used as the supporting layer material used if desired. Thickness of the supporting layer material can preferably be 50 to 300 $\mu$m, and its porosity can preferably be 50 to 90%. Normally, a paste composition containing the above electrode catalyst can be filled within void of the supporting layer material and bonded on the surface of the same such that the obtained catalyst electrode layer has a thickness of 5 to 50 $\mu$m, so that the catalyst electrode layer can be formed.

Also, an amount of the ion-conductivity providing agent of the present invention applied in the above methods (I) and (II) is not particularly limited, and in the above method (I), it is preferable to apply such that a content of the ion-conductivity providing agent of the present invention is 5 to 60 mass%, particularly 10 to 40 mass%, with respect to the catalyst electrode layer in the range of 1 to 50% of the entire thickness based on the joining surface, in view of the effect for giving ion conductivity. Also, in the above method (II), it is preferable to apply such that a content of the ion-conductivity providing agent of the present invention is 5 to 60 mass%, particularly 10 to 40 mass% with respect to the total mass of the catalyst electrode layer.

Furthermore, the thermal compressing for joining the catalyst electrode layer in the above methods (I) and (II) can be done with an apparatus able to apply pressure and heat, generally hot pressing machine, roll pressing machine and the like. Pressing temperature is generally 80°C to 200°C. The pressure can depend on the thickness and hardness of the catalyst electrode layer, and normally be 0.5 to 20 MPa.

The anion-exchange membrane-catalyst electrode assembly prepared by applying the ion-conductivity providing agent of the present invention in this way can be used by installing in the anion-exchange membrane type fuel cell having the basic structure as shown in FIG. 1. For the fuel, hydrogen gas and liquid fuel such as methanol and ethanol are most commonly used, and other fuels such as ethylene glycol, dimethyl ether, hydrazine and ammonia also show similar excellent effect. Also, when using the liquid fuel, a basic compound may be added into the liquid fuel. By adding the basic compound, ion conductivity may be given to the liquid fuel to obtain further higher output in some cases. As the basic compound, there may be illustrated potassium hydroxide, sodium hydroxide, potassium bicarbonate, sodium bicarbonate, etc. Adequate concentration to be added may be 0.05 to 3 mol/L.

EXAMPLES

Hereinafter, the present invention will be explained by using examples in more detail, but the present invention cannot be limited to these examples. Note that properties of the ion-conductivity providing agent shown in the present examples and comparative examples were measured by the following methods.

1) Ion-Exchange Capacity and Water Content of Ion Conductivity Providing Agent

Respective counterion type ion-conductivity providing agents were dissolved in a solvent to have 5 mass% in concentration. Each of the solution was casted in a polytetrafluoroethylene petri dish so as to have a film thickness after drying of about 30 $\mu$m, followed by drying at room temperature for 24 hours to obtain a cast film of each ion-conductivity providing agent.

The obtained cast film of the anion-conductivity providing agent was immersed in 0.5 mol·L$^{-1}$-NaCl aqueous solution for 10 hours or more to convert it into chloride ion type. Then, this was further converted to nitrate ion type by using 0.2 mol·L$^{-1}$-NaNO$_3$ aqueous solution, and thus-extricated chloride ion was titrated with silver nitrate aqueous solution by potentiometric titrator (COMTITE-900 by Hiranuma Sangyo Co., Ltd.) ("A" mol). Next, the same cast film was immersed in 0.5 mol·L$^{-1}$-NaCl aqueous solution at 25°C for 4 hours or more, and sufficiently washed with ion-exchange water, and then, water was wiped off from the surface of the film with tissue paper and the like to measure a wet weight ("W" g). Furthermore, the film was dried under reduced pressure at 60°C for 5 hours to measure the weight ("D" g). Based on the above measured values, the ion-exchange capacity and water content were obtained by the following equation.

$$\text{Ion-Exchange Capacity} = A \times 1000/D \ [\text{mmol·g}^{-1}\text{-dried weight}]$$

$$\text{Water Content} = 100 \times (W-D)/D \ [\%]$$

2) Content Measurements of Hydroxide Ion, Carbonate Ion and Bicarbonate Ion in Ion Conductivity Providing Agent

Y g of the ion-conductivity providing agent was immersed in 100 ml of 1 mol/L-NaCl aqueous solution for 5 hours or more. The obtained immersion fluid was titrated with 0.1 mol/L-hydrochloric acid aqueous solution using 0.1 mol/L-phenolphthalein ethanol solution as an indicator, and titer (V1 ml) was measured where the endpoint of the titration was defined as the point at which the solution was changed from red to colorless. By this titration, the neutralized amount of OH$^-$ ion and converted amount of CO$_3^{2-}$ ion to HCO$_3^-$ ion were measured. Next, an ethanol solution of bromocresol green-methyl red mixture (bromocresol green 0.075 mass% and methyl red 0.05 mass%) was added as an indicator to the same immersion fluid, and continuously titrated with 0.1 mol/L-hydrochloric acid aqueous solution. Titer (V2 ml) was measured where the endpoint of the titration was defined as the point at which the solution was changed from green to orange color. By this titration, the neutralized amount of HCO$_3^-$ ion was measured.

Note that the contents of OH$^-$ ion, CO$_3^{2-}$ ion and HCO$_3^-$ ion in the ion-conductivity providing agent can be calculated as follows when the titers V1 and V2 satisfy the following relationships because the OH$^-$ ion and HCO$_3^-$ ion never coexist in view of pKa.

(at the time of V1>V2) existing ion species can only be OH$^-$ ion and CO$_3^{2-}$ ion.

$$\text{CO}_3^{2-} \text{ ion content} = 0.1 \times V2/Y \ [\text{mmol/g}]$$

$$OH^- \text{ ion content } = 0.1 \times (V1 - V2)/Y \text{ [mmol/g]}$$

(at the time of V1<V2) existing ion species can only be $CO_3^{2-}$ ion and $HCO_3^-$ ion.

$$CO_3^{2-} \text{ ion content } = 0.1 \times V1/Y \text{ [mmol/g]}$$

$$HCO_3^- \text{ ion content } = 0.1 \times (V2 - V1)/Y \text{ [mmol/g]}$$

(at the time of V1=V2) existing ion species can only be $CO_3^{2-}$ ion.

$$CO_3^{2-} \text{ ion content } = 0.1 \times V1/Y \text{ [mmol/g]}$$

3) Ion Conductivity of Ion Conductivity Providing Agent

The cast film of the anion-conductivity providing agent obtained by the above method 1) was immersed in 0.5 mol/L-NaOH aqueous solution for 10 hours or more to convert to hydroxide ion type, then washed with pure water and dried at room temperature for 24 hours or more.

An insulating substrate was prepared by separately arranging 5 platinum wires with line width of 0.3 mm parallel to each other, and a reed-shaped sample of the above cast film with a width of 2.0 cm moistened with pure water was pressed to the platinum wires. The cast film was always kept moist in a constant temperature and humidity reservoir at 40°C, and AC impedance was measured when applying 1 kHz of AC to the platinum wires.

Each of AC impedance was measured as the distance between platinum wires was changed from 0.5 to 2.0 cm, and plotted against the distance between platinum wires. Based on the slope of the impedance (the slope between terminals), specific resistance was calculated for the ion-conductivity providing agent film to eliminate an influence due to contact resistance generated between the platinum wire and cast film. A good linear relationship was obtained between the distance between platinum wires and impedance measured value. From a slope between resistance poles and film thickness, ion conductivity of the ion-conductivity providing agent was calculated according to the following equation.

Note that the film thickness of the cast film in the above measurements was measured by a film thickness meter by moistening the cast film with pure water and holding it between glass plates. Also, all the above operations were done in a glove box under nitrogen atmosphere.

$$\sigma = 1/\{S \times (L \times 2.0)\}$$

$\sigma$: ion conductivity [S/cm]
L: film thickness [cm]
S: slope between terminals [$\Omega$/cm]

4) Fuel Cell Output Test

(Preparation of Anion-Exchange Membrane)

A porous polyethylene membrane (with film thickness of 25 $\mu$m, average pore diameter of 0.03 $\mu$m and porosity of 37%) was impregnated with a polymerizable monomer composition including 97 parts by mass of chloromethylstyrene, 3 parts by mass of divinylbenzene, 5 parts by mass of ethylene glycol diglycidylether and 5 parts by mass of t-butyl peroxy ethyl hexanoate, and both sides of the porous membrane were covered with 100-$\mu$m polyester films as separating materials, followed by heating and polymerizing under pressure by 0.3 MPa nitrogen at 80°C for 5 hours. The obtained membrane-shaped material was immersed in an aqueous solution containing 6 mass% of trimethylamine and 25 mass% of acetone at room temperature for 16 hours, so that an anion-exchange membrane for a fuel cell having a quaternary ammonium base as its anion-exchange group was obtained.

The anion-exchange capacity of the obtained anion-exchange membrane was 1.8 mmol/g and water content was 25 mass%.

The anion-exchange membrane was impregnated with 0.5 mol/L of sodium hydroxide aqueous solution, and was used for fuel cell output evaluation after ion-exchanging the counterion of the anion-exchange group into hydroxide ion.

(Preparation of Catalyst Electrode Layer)

To electrode catalyst made of carbon black supporting 50 mass% of platinum with average particle diameter of 2 nm, an organic solvent solution of the ion-conductivity providing agent was mixed so as to have a mass ratio of "ion-conductivity providing agent : catalyst electrode" of 1:4, so that a catalyst electrode layer forming composition was obtained. The obtained catalyst electrode layer forming composition was applied onto carbon paper with a thickness of 200 $\mu$m and porosity of 80% so as to have platinum amount of 0.5 mg/cm$^2$, and was then dried under the atmospheric pressure at 25°C for 15 hours, followed by drying at 80°C for 4 hours under reduced pressure, so that a catalyst electrode layer having carbon paper as its support was prepared. The content of the ion-conductivity providing agent in the catalyst electrode layer was 20 mass%. Also, the area of the catalyst electrode layer was 5 cm$^2$.

(Preparation of Anion-Exchange Membrane-Catalyst Electrode Membrane Assembly)

Thus prepared catalyst electrode layers having carbon paper as support were set at both surfaces of the anion-exchange membrane, and thermally-pressed at 100°C under applying pressure of 5 MPa for 100 seconds, followed by leaving it at room temperature for 2 minutes.

(Fuel Cell Output Test)

The obtained anion-exchange membrane-catalyst electrode layer assembly was installed in a fuel cell as shown in FIG. 1, and a power generation test was performed by setting the temperature of the fuel cell at 50°C, supplying hydrogen humidified at 50°C to the fuel chamber side at 50 ml/min and supplying air humidified at 50°C to the oxidizing agent chamber side at 200 ml/min. Terminal voltage of the cell was measured at current density of 0 A-cm$^{-2}$ and 0.1 A·cm$^{-2}$.

Example 1

(Synthesis of Chloromethyl Group Containing Resin)

Polystyrene-poly(ethylene-propylene)-polystyrene triblock copolymer (SEPS) (with weight average molecule weight of 150,000 and styrene content of 60 mass%), i.e. a hydrocarbon-based thermoplastic elastomer, was dissolved to be 5 mass% in chloroform in concentration, and was added with chloromethyl methyl ether and anhydrous tin chloride, respectively to be 10 mol times and 0.1 mol times the amount of styrene units in SEPS, followed by reaction at 50°C for 2 hours. Then, the reaction solution was poured in a mixed solution of equal masses of 1,4-dioxane and water to terminate the reaction, and then poured in 30 mass% methanol aqueous solution to precipitate the resin, followed by drying, so that chloromethyl group containing resin was obtained.

(Preparation of Chlorine-Type Anionic Conductive Resin)

Next, the obtained chloromethyl group containing resin was dispersed in an aqueous solution containing 3 mass% of trimethylamine and 25 mass% of acetone, and was agitated at room temperature for 4 days to convert the chloromethyl group to quaternary ammonium base in the chloromethyl group containing elastomer. The reaction solution was agitated in 0.5 mol/L-hydrochloric acid for 1 hour, and filtered to obtain chlorine-type anionic conductive resin. The resin was dissolved to be 5 mass% in tetrahydrofuran to prepare cast film from the resin solution. By using this cast film, anion-exchange capacity and water content were measured and results are shown in Table 1. Also, Table 1 shows measured results of water solubility at 20°C and Young's modulus.

(Preparation of Carbonate Type Ion Conductive Resin)

The chlorine-type anionic conductive resin obtained as noted above was dispersed in large excess of 0.5 mol/L-Na$_2$CO$_3$ aqueous solution, and agitated at 25°C for 10 hours to ion-exchange the counterion of the quaternary ammonium base from chloride ion to carbonate ion, followed by washing with ion exchange water and drying at 40°C under 100 Pa of reduced pressure for 8 hours, so that carbonate type anionic conductive resin was obtained. For the carbonate type anionic conductive resin, it was confirmed that substantially all counterions were $CO_3^{2-}$ by measuring the content of counterion species immediately after the production.

The obtained carbonate type anionic conductive resin was dissolved to be 5 mass% in tetrahydrofuran at 60°C for 8 hours. Cast film prepared by using the obtained resin solution was left undisturbed in air for 24 hours, and then, anion-exchange capacity, water content and ion conductivity were measured. Also, after the above carbonate type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Example 2

(Preparation of Bicarbonate Type Ion Conductive Resin)

The chlorine-type anionic conductive resin prepared in Example 1 was dispersed in large excess of 0.5 mol/L-$NaHCO_3$ aqueous solution, and agitated for 10 hours to ion-exchange the counterion of the quaternary ammonium base from chloride ion to bicarbonate ion, followed by washing with ion exchange water and drying at 40°C under 100 Pa of reduced pressure for 8 hours, so that bicarbonate type anionic conductive resin was obtained. For the bicarbonate type anionic conductive resin, it was confirmed that substantially all counterions were $HCO_3^-$ by measuring the content of counterion species immediately after the production.

The obtained bicarbonate type anionic conductive resin was dissolved to be 5 mass% in tetrahydrofuran at 60°C for 8 hours. Cast film prepared by using the obtained resin solution was left undisturbed in air for 24 hours, and then, anion-exchange capacity, water content and ion conductivity were measured. Also, after the above bicarbonate type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Comparative Example 1

(Preparation of OH Type Anionic Conductive Resin)

The chlorine-type anionic conductive resin prepared in Example 1 was dispersed in large excess of 0.5 mol/L-NaOH aqueous solution to ion-exchange the counterion of the quaternary ammonium base from chloride ion to hydroxide ion, followed by washing with ion exchange water and drying at 40°C under 100 Pa of reduced pressure for 8 hours, so that OH type anionic conductive resin was obtained. For the OH type anionic conductive resin, it was confirmed that substantially all counterions were $OH^-$ by measuring the content of counterion species immediately after the production.

The obtained OH type anionic conductive resin was dissolved to be 5 mass% in tetrahydrofuran at 60°C for 8 hours. Cast film prepared by using the obtained resin solution was left undisturbed in air for 24 hours, and then, anion-exchange capacity, water content and ion conductivity were measured. Also, after the above OH type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Example 3

(Synthesis of Chloromethyl Group Containing Resin)

Polystyrene-poly(ethylene-butylene)-polystyrene triblock copolymer (SEBS) (with weight average molecule weight of 30,000 and styrene content of 30 mass%), i.e. a hydrocarbon-based thermoplastic elastomer, was dissolved to be 5 mass% in chloroform, and added with chloromethyl methyl ether and anhydrous zinc chloride, respectively to be 40 mol times and 0.3 mol times the amount of styrene units in SEBS, followed by reaction at 35°C for 2 hours. Then, the reaction solution was poured in a mixed solution of equal masses of 1,4-dioxane and water to terminate the reaction, and then poured in 30 mass% methanol aqueous solution to precipitate the resin, followed by drying, so that chloromethyl group containing resin was obtained.

(Preparation of Chlorine-Type Anionic Conductive Resin)

Next, the obtained chloromethyl group containing resin was dispersed in an aqueous solution containing 3 mass% of trimethylamine and 25 mass% of acetone, and was agitated at room temperature for 1 day to convert the chloromethyl group to quaternary ammonium base in the chloromethyl group containing elastomer. The reaction solution was agitated in 0.5 mol/L-hydrochloric acid for 1 hour, and filtered to obtain chlorine-type anionic conductive resin. The resin was dissolved to be 5 mass% in 1-propanol in an autoclave at 130°C for 3 hours. Using the cast film prepared from the resin solution, anion-exchange capacity and water content were measured, and the results are shown in Table 1. Also, Table 1 shows measured results of water solubility at 20°C and Young's modulus.

(Preparation of Carbonate Type Ion Conductive Resin)

The chlorine-type anionic conductive resin obtained as noted above was dispersed in large excess of 0.5mol/L-$Na_2CO_3$ aqueous solution, and agitated at 25°C for 10 hours to ion-exchange the counterion of the quaternary ammonium base from chloride ion to carbonate ion, followed by washing with ion exchange water and drying at 30°C for 3 days, so that carbonate type anionic conductive resin was obtained. For the carbonate type anionic conductive resin, it was confirmed that substantially all counterions were $CO_3^{2-}$ by measuring the content of counterion species immediately after the production.
The obtained carbonate type anionic conductive resin was dissolved to be 5 mass% in 1-propanol in an autoclave at 130°C for 3 hours. Cast film prepared by using the obtained resin solution was left undisturbed in air for 24 hours, and then, anion-exchange capacity, water content and ion conductivity were measured. Also, after the above carbonate type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Example 4

(Preparation of Bicarbonate Type Anionic Conductive Resin)

The chlorine-type anionic conductive resin prepared in Example 3 was dispersed in large excess of 0.5 mol/L-$NaHCO_3$ aqueous solution, and agitated at 25°C for 10 hours to ion-exchange the counterion of the quaternary ammonium base from chloride ion to bicarbonate ion, followed by washing with ion exchange water and drying at 30°C for 3 days, so that bicarbonate type anionic conductive resin was obtained. For the bicarbonate type anionic conductive resin, it was confirmed that substantially all counterions were $HCO_3^-$ by measuring the content of counterion species immediately after the production.
The obtained bicarbonate type anionic conductive resin was dissolved to be 5 mass% in 1-propanol in an autoclave at 130°C for 3 hours. Cast film prepared by using the obtained resin solution was left undisturbed in air for 24 hours, and then, anion-exchange capacity, water content and ion conductivity were measured. Also, after the above bicarbonate type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Comparative Example 2

(Preparation of OH Type Anionic Conductive Resin)

The chlorine-type anionic conductive resin prepared in Example 3 was dispersed in large excess of 0.5 mol/L-NaOH aqueous solution to ion-exchange the counterion of the quaternary ammonium base from chloride ion to hydroxide ion, followed by washing with ion exchange water and drying at 30°C for 3 days, so that OH type anionic conductive resin was obtained. For the OH type anionic conductive resin, it was confirmed that substantially all counterions were OH⁻ by measuring the content of counterion species immediately after the production.
The obtained OH type anionic conductive resin was dissolved to be 5 mass% in 1-propanol in an autoclave at 130°C for 3 hours. Cast film prepared by using the obtained resin solution was left undisturbed in air for 24 hours, and then, anion-exchange capacity, water content and ion conductivity were measured. Also, after the above OH type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Example 5

(Preparation of Chlorine-Type Anionic Conductive Resin)

For resin having a chloromethyl group, poly (chloromethylstyrene-styrene) (CMS) copolymer having molecule weight of 30,000 and styrene content of 80 mass% was used.

The chloromethyl group containing resin was dispersed in an aqueous solution containing 3 mass% of trimethylamine and 25 mass% of acetone, and agitated at room temperature for 5 hours to convert the chloromethyl group to quaternary ammonium base in the chloromethyl group containing resin. The reaction solution was agitated in 0.5 mol/L-hydrochloric acid for 1 hour, and filtered to obtain chlorine-type anionic conductive resin. The resin was dissolved to be 5 mass% in 1-propanol at 50°C for 3 hours. Cast film prepared from the resin solution was used to measure anion-exchange capacity and water content measurement, and the results are shown in Table 1. Also, Table 1 shows measured results of water solubility at 20°C and Young's modulus.

(Preparation of Bicarbonate Type Ion Conductive Resin)

The obtained chlorine-type anionic conductive resin was dispersed in large excess of 0.5 mol/L-NaHCO$_3$ aqueous solution, and agitated at 25°C for 10 hours to ion-exchange the counterion of the quaternary ammonium base from chloride ion to bicarbonate ion, followed by washing with ion exchange water and drying at 30°C for 3 days, so that bicarbonate type anionic conductive resin was obtained. For the bicarbonate type anionic conductive resin, it was confirmed that substantially all counterions were $HCO_3^-$ by measuring the content of counterion species immediately after the production.

The obtained bicarbonate type anionic conductive resin was dissolved to be 5 mass% in 1-propanol at 50°C for 3 hours. Cast film prepared by using the obtained resin solution was left undisturbed in air for 24 hours, and then, anion-exchange capacity, water content and ion conductivity were measured. Also, after the above bicarbonate type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Comparative Example 3

(Preparation of OH Type Anionic Conductive Resin)

The chlorine-type anionic conductive resin prepared in Example 5 was dispersed in large excess of 0.5 mol/L-NaOH aqueous solution to ion-exchange the counterion of the quaternary ammonium base from chloride ion to hydroxide ion, followed by washing with ion exchange water and drying at 30°C for 3 days, so that OH type anionic conductive resin was obtained. For the OH type anionic conductive resin, it was confirmed that substantially all counterions were $OH^-$ by measuring the content of counterion species immediately after the production.

The obtained OH type anionic conductive resin was dissolved to be 5 mass% in 1-propanol at 50°C for 3 hours. Cast film prepared by using the obtained resin solution was left undisturbed in air for 24 hours, and then, anion-exchange capacity, water content and ion conductivity were measured. Also, after the above OH type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Example 6

(Synthesis of Chloromethyl Group Containing Resin)

20 g of polysulfone resin (PSf) (with weight average molecule weight of 26,000) was dissolved in 200 ml of chloromethyl methyl ether, and added with 1 g of anhydrous zinc chloride, followed by reaction at 35°C for 1 hour. Then, the reaction solution was poured in a mixed solution of equal masses of 1,4-dioxane and water to terminate the reaction, and then poured in 30 mass% methanol aqueous solution to precipitate the resin, followed by drying, so that chloromethyl group containing resin was obtained.

(Preparation of Chlorine-Type Anionic Conductive Resin)

Next, the obtained chloromethyl group containing resin was dispersed in an aqueous solution containing 3 mass% of trimethylamine and 25 mass% of acetone, and agitated at room temperature for 1 day to convert the chloromethyl group to quaternary ammonium base in the chloromethyl group containing resin. The reaction solution was agitated in 0.5 mol/L-hydrochloric acid for 1 hour, and filtered to obtain chlorine-type anionic conductive resin. The resin was dissolved to be 5 mass% in dimethylformamide at 80°C for 3 hours. Using cast film prepared from the resin solution, anion-exchange capacity and water content was measured, and the results are shown in Table 1. Also, Table 1 shows measured results of water solubility at 20°C and Young's modulus.

(Preparation of Bicarbonate Type Ion Conductive Resin)

The obtained chlorine-type anionic conductive resin was dispersed in large excess of 0.5 mol/L-NaHCO$_3$ aqueous solution, and agitated at 25°C for 10 hours to ion-exchange the counterion of the quaternary ammonium base from chloride ion to bicarbonate ion, followed by washing with ion exchange water and drying at 30°C for 3 days, so that bicarbonate type anionic conductive resin was obtained. For the bicarbonate type anionic conductive resin, it was confirmed that substantially all counterions were HCO$_3^-$ by measuring the content of counterion species immediately after the production.

The obtained bicarbonate type anionic conductive resin was dissolved to be 5 mass% in dimethylformamide at 80°C for 3 hours. Cast film prepared by using the obtained resin solution was left undisturbed in air for 24 hours, and then, anion-exchange capacity, water content and ion conductivity were measured. Also, after the above bicarbonate type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Comparative Example 4

(Preparation of OH Type Anionic Conductive Resin)

The chlorine-type anionic conductive resin prepared in Example 6 was dispersed in large excess of 0.5 mol/L-NaOH aqueous solution to ion-exchange the counterion of the quaternary ammonium base from chloride ion to hydroxide ion, followed by washing with ion exchange water and drying at 30°C for 3 days, so that OH type anionic conductive resin was obtained. For the OH type anionic conductive resin, it was confirmed that substantially all counterions were OH$^-$ by measuring the content of counterion species immediately after the production.

The obtained OH type anionic conductive resin was dissolved to be 5 mass% in dimethylformamide at 80°C for 3 hours. Cast film prepared by using the obtained resin solution was left undisturbed in air for 24 hours, and then, anion-exchange capacity, water content and ion conductivity were measured. Also, after the above OH type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Example 7

(Preparation of Chlorine-Type Anionic Conductive Resin)

The chloromethyl group containing SEBS obtained in Example 3 was dispersed in 3 mass% acetone solution of tributyl phosphine, and agitated at room temperature for 1 day to convert the chloromethyl group to quaternary phosphonium base in the chloromethyl-group containing SEBS. The reaction solution was agitated in 0.5 mol/L-hydrochloric acid aqueous solution for 1 hour, and filtered to obtain chlorine-type anionic conductive resin. The resin was dissolved to be 5 mass% in 1-propanol in an autoclave at 130°C for 3 hours. By using cast film prepared from the resin solution, anion-exchange capacity and water content were measured, and the results are shown in Table 1. Also, Table 1 shows measured results of water solubility at 20°C and Young's modulus.

(Preparation of Bicarbonate Type Ion Conductive Resin)

The obtained chlorine-type anionic conductive resin was dispersed in large excess of 0.5 mol/L-NaHCO$_3$ aqueous solution, and agitated at 25°C for 10 hours to ion-exchange the counterion of the quaternary phosphonium base from chloride ion to bicarbonate ion, followed by washing with ion exchange water and drying at 30°C for 3 days, so that bicarbonate type anionic conductive resin was obtained. For the bicarbonate type anionic conductive resin, it was confirmed that substantially all counterions were $HCO_3^-$ by measuring the content of counterion species immediately after the production.

The obtained bicarbonate type anionic conductive resin was dissolved to be 5 mass% in 1-propanol in an autoclave at 130°C for 3 hours. Cast film prepared by using the obtained resin solution was left undisturbed in air for 24 hours, and then, anion-exchange capacity, water content and ion conductivity were measured. Also, after the above bicarbonate type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Comparative Example 5

(Preparation of OH Type Anionic Conductive Resin)

The chlorine-type anionic conductive resin prepared in Example 7 was dispersed in large excess of 0.5 mol/L-NaOH aqueous solution to ion-exchange the counterion of the quaternary phosphonium base from chloride ion to hydroxide ion, followed by washing with ion exchange water and drying at 30°C for 3 days, so that OH type anionic conductive resin was obtained. For the OH type anionic conductive resin, it was confirmed that substantially all counterions were OH⁻ by measuring the content of counterion species immediately after the production.

The obtained OH type anionic conductive resin was dissolved to be 5 mass% in 1-propanol in an autoclave at 130°C for 3 hours. Cast film prepared by using the obtained resin solution was left undisturbed in air for 24 hours, and then, anion-exchange capacity, water content and ion conductivity were measured. Also, after the above OH type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Example 8

(Preparation of Iodine Type Anionic Conductive Resin)

For the resin containing a tertiary amino group, poly-4-vinylpyridine (P-4VP) with molecule weight of 160,000 was used.

P-4VP was dissolved to be 10 mass% in methanol, and added with 0.75 times more moles of methyl iodide than the mole of the tertiary amino group of P-4VP, followed by reaction at room temperature for 24 hours. After the reaction, methanol and unreacted methyl iodide were distilled away, and the obtained partially-quaternarized P-4VP was washed with hexane to obtain iodine type anionic conductive resin. The resin was dissolved to be 5 mass% in methanol. By using cast film prepared from the resin solution, anion-exchange capacity and water content were measured, and the results are shown in Table 1. Also, Table 1 shows measured results of water solubility at 20°C and Young's modulus.

(Preparation of Bicarbonate Type Ion Conductive Resin)

The obtained iodine type anionic conductive resin was dispersed in large excess of 0.5 mol/L-NaHCO₃ aqueous solution, and agitated at 25°C for 10 hours to ion-exchange the counterion of the quaternary pyridinium base from iodide ion to bicarbonate ion, followed by washing with ion exchange water and drying at 30°C for 3 days, so that bicarbonate type anionic conductive resin was obtained. For the bicarbonate type anionic conductive resin, it was confirmed that substantially all counterions were $HCO_3^-$ by measuring the content of counterion species immediately after the production.

The obtained bicarbonate type anionic conductive resin was dissolved to be 5 mass% in methanol. Cast film prepared by using the obtained resin solution was left undisturbed in air for 24 hours, and then, anion-exchange capacity, water content and ion conductivity were measured. Also, after the above bicarbonate type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

Comparative Example 6

(Preparation of OH Type Anionic Conductive Resin)

The iodine type anionic conductive resin prepared in Example 8 was dispersed in large excess of 0.5 mol/L-NaOH aqueous solution to ion-exchange the counterion of the quaternary pyridinium base from iodide ion to hydroxide ion, followed by washing with ion exchange water and drying at 30°C for 3 days, so that OH type anionic conductive resin was obtained. For the OH type anionic conductive resin, it was confirmed that substantially all counterions were OH⁻ by measuring the content of counterion species immediately after the production.

The obtained OH type anionic conductive resin was dissolved to be 5 mass% in methanol. Cast film prepared by using the obtained resin solution was left undisturbed in air for 24 hours, and then, anion-exchange capacity, water content and ion conductivity were measured. Also, after the above OH type anionic conductive resin was left undisturbed in air for 24 hours, the content of counterion species was measured. Furthermore, the above resin solution which was left undisturbed in air for 24 hours was used to prepare an anion-exchange membrane-catalyst electrode assembly, and fuel cell output test was conducted. The results are shown in Table 2.

[Table 1]

Table 1

| Example | Raw Material Resin | Properties for Halogen-Type Anionic Conductive Resin | | | |
| --- | --- | --- | --- | --- | --- |
| | | Anion Exchange Capacity [mmol/g] | Water Content [%] | Water Solubility [wt%] | Young's Modulus [MPa] |
| 1 | chloromethyl group containing SEPS | 0.85 | 30 | 0.03 | 70 |
| 3 | chloromethyl group containing SEBS | 1.51 | 130 | 0.04 | 50 |
| 5 | CMS | 1.30 | 50 | 2.5 | 500 |
| 6 | chloromethyl group containing PSf | 1.76 | 50 | 0.9 | 200 |
| 7 | chloromethyl group containing SEBS | 1.17 | 90 | 0.03 | 50 |
| 8 | P-4VP | 0.71 | 40 | 0.9 | 400 |
| * SEPS: Polystyrene-poly(ethylene-propylene)-polystyrene triblock copolymer<br>* SEBS: Polystyrene-poly(ethylene-butylene)-polystyrene triblock copolymer<br>* CMS: poly (chloromethylstyrene-styrene) copolymer<br>* PSf: polysulfone<br>* P-4VP: poly-4-vinylpyridine | | | | | |

[Table 2]

Table 2

| Example | Counterion at Production | Rate of Counterion Species after Leaving Undisturbed in Air for 24 hrs [%] | | | Properties of Ion Conductive Resin | | | Fuel Cell Output Voltage [V] | |
|---|---|---|---|---|---|---|---|---|---|
| | | $OH^-$ | $CO_3^{2-}$ | $HCO_3^-$ | Anion Exchange Capacity [mmol/g] | Water Content [%] | Ion Conductivity [mS/cm] | 0A/cm2 | 0.1A/cm2 |
| 1 | $CO_3^{2-}$ | 0 | 8 | 92 | 0.75 | 27 | 9 | 0.88 | 0.21 |
| 2 | $HCO_3^-$ | 0 | 0 | 100 | 0.80 | 30 | 11 | 0.89 | 0.25 |
| Comp.1 | $OH^-$ | 0 | 10 | 90 | 0.65 | 24 | 7 | 0.88 | 0.20 |
| 3 | $CO_3^{2-}$ | 0 | 3 | 97 | 1.43 | 120 | 40 | 0.99 | 0.42 |
| 4 | $HCO_3^-$ | 0 | 0 | 100 | 1.50 | 130 | 43 | 1.01 | 0.43 |
| Comp.2 | $OH^-$ | 0 | 6 | 94 | 1.25 | 100 | 35 | 0.98 | 0.40 |
| 5 | $HCO_3^-$ | 0 | 0 | 100 | 1.28 | 50 | 15 | 0.67 | 0.06 |
| Comp.3 | $OH^-$ | 0 | 5 | 95 | 1.10 | 40 | 12 | 0.67 | 0.05 |
| 6 | $HCO_3^-$ | 0 | 0 | 100 | 1.73 | 51 | 18 | 0.71 | 0.08 |
| Comp.4 | $OH^-$ | 0 | 2 | 98 | 1.59 | 39 | 15 | 0.70 | 0.06 |
| 7 | $HCO_3^-$ | 0 | 0 | 100 | 1.10 | 88 | 18 | 0.92 | 0.30 |
| Comp.5 | $OH^-$ | 0 | 5 | 95 | 0.90 | 80 | 14 | 0.89 | 0.25 |
| 8 | $HCO_3^-$ | 0 | 0 | 100 | 0.65 | 40 | 7 | 0.53 | 0.05 |
| Comp.6 | $OH^-$ | 0 | 3 | 97 | 0.40 | 20 | 3 | 0.43 | unmeasurable |

EXPLANATION OF SYMBOLS

1: cell bulkhead
2: fuel flow hole
3: oxidizing gas flow hole
4: fuel chamber side catalyst electrode layer
5: oxidizing agent chamber side catalyst electrode layer
6: solid polyelectrolyte membrane (anion-exchange membrane)
7: fuel chamber
8: oxidizing agent chamber

**Claims**

1.  A method for producing an ion-conductivity providing agent for a catalyst electrode layer in an anion-exchange membrane type fuel cell, comprising:

    producing anionic conductive resin including a quaternary ammonium base or quaternary phosphonium base having a halogeno ion as its counterion, and
    bringing the anionic conductive resin into contact with carbonate solution and/or bicarbonate solution to obtain anionic conductive resin in which at least a part of the counterion of said quaternary ammonium base or quaternary phosphonium base is $CO_3^{2-}$ and/or $HCO_3^-$.

2.  The method for producing an ion-conductivity providing agent for a catalyst electrode layer as set forth in claim 1, wherein a method for producing the anionic conductive resin including a quaternary ammonium base or quaternary phosphonium base having a halogeno ion as its counterion is selected from any one of the following methods a) to c):

    a) a method in which resin having a halogenoalkyl group is reacted with an agent having a tertiary amino group for forming quaternary ammonium, or an agent having a tertiary phosphine group for forming quaternary phosphonium ;
    b) a method in which resin having an amino group or phosphine group is reacted with an alkylating agent having a halogenoalkyl group; and
    c) a method in which a polymerizable composition including a polymerizable monomer including a quaternary ammonium base or quaternary phosphonium base having a halogeno ion as its counterion is polymerized.

3.  The method for producing an ion-conductivity providing agent for a catalyst electrode layer as set forth in claim 1, wherein bicarbonate solution is used as carbonate solution and/or bicarbonate solution.

4.  A method for producing an anion-exchange membrane-catalyst electrode assembly for an anion-exchange membrane type fuel cell comprising:

    producing at least one of a fuel chamber side catalyst electrode layer and an oxidizing agent chamber side catalyst electrode layer to be joined to respective faces of an anion-exchange membrane by using an ion-conductivity providing agent for a catalyst electrode layer obtained by the method as set forth in claim 1 or 3.

5.  A method for producing an anion-exchange membrane type fuel cell wherein the anion-exchange membrane-catalyst electrode assembly produced by the method as set forth in claim 4 is used.

FIG. 1

## INTERNATIONAL SEARCH REPORT

International application No.

PCT/JP2009/060059

### A. CLASSIFICATION OF SUBJECT MATTER
*H01M4/88(2006.01)i, H01M4/86(2006.01)i, H01M8/10(2006.01)i*

According to International Patent Classification (IPC) or to both national classification and IPC

### B. FIELDS SEARCHED

Minimum documentation searched (classification system followed by classification symbols)
H01M4/88, H01M4/86, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| P,Y | WO 2008/149950 A1 (Tokuyama Corp.),<br>11 December, 2008 (11.12.08),<br>Par. Nos. [0073] to [0079], [0143], [0144]<br>(Family: none) | 1-5 |
| Y | JP 2007-194048 A (Kuraray Co., Ltd.),<br>02 August, 2007 (02.08.07),<br>Par. Nos. [0051] to [0057], [0066]<br>(Family: none) | 1-5 |
| E,X | JP 2009-173898 A (Tokuyama Corp.),<br>06 August, 2009 (06.08.09),<br>Par. Nos. [0075] to [0076], [0104], [0105]<br>(Family: none) | 1-5 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 August, 2009 (14.08.09) | 25 August, 2009 (25.08.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
|---|
| PCT/JP2009/060059 |

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2008-4312 A　(Kuraray Co., Ltd.),<br>10 January, 2008 (10.01.08),<br>Par. Nos. [0046] to [0052], [0065]<br>(Family: none) | 1-5 |
| A | JP 2003-288903 A　(Mitsubishi Chemical Corp.),<br>10 October, 2003 (10.10.03),<br>Claims; Par. Nos. [0026], [0047]<br>(Family: none) | 1-5 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11135137 B
- JP H11273695 B
- JP 2000331693 A
- JP 2002367626 A